# EUROPÄISCHE PATENTANMELDUNG

(11) **EP 4 531 222 A1**
(43) Veröffentlichungstag der Anmeldung: **02.04.2025**
(21) Anmeldenummer: 24188911.2
(22) Anmeldetag: 16.07.2024
(51) Int. Cl.: H02H 7/085, H02H 3/093, H02H 3/00, H02H 3/08, H02H 3/44

(54) **SCHALTGERÄT ZUM SCHUTZ EINER ELEKTRISCHEN LAST VOR ÜBERSTROM**

(30) Priorität: 27.09.2023 DE 102023209434
(71) Anmelder: Siemens Aktiengesellschaft, 80333 München (DE)
(72) Erfinder: Breiter, Julian Stefan, 93059 Regensburg (DE); Langen, Stefan, 92280 Kastl (DE); List, Thomas, 92237 Sulzbach-Rosenberg (DE); Zitzler, Stefan, 92421 Schwandorf (DE)
(74) Vertreter: Siemens Patent Attorneys

(57) **Zusammenfassung**

Die Erfindung betrifft ein Schaltgerät (1) zum Schutz einer elektrischen Last (16) vor Überstrom, aufweisend:
- einen Laststromeingang (2), an den eine Laststromleitung (17) von einer Stromquelle (15) anschließbar ist, und einen Laststromausgang (3), an den eine Laststromleitung (18) zu der elektrischen Last (16) anschließbar ist;
- einen Laststrompfad (10), durch den Strom von dem Laststromeingang (2) zu dem Laststromausgang (3) geleitet werden kann,
- einen Halbleiterschalter (5), der in den Laststrompfad (10) geschaltet ist, wobei der Halbleiterschalter (5) Strom durch den Laststrompfad (10) zulässt, wenn der Halbleiterschalter (5) eingeschaltet ist, und Strom durch den Laststrompfad (10) sperrt, wenn der Halbleiterschalter (5) ausgeschaltet ist;
- eine Steuerschaltung (6), die dazu eingerichtet ist, in Reaktion auf ein empfangenes Schaltsignal den Halbleiterschalter (5) ein- oder auszuschalten;
- eine Strommessanordnung (9) zum Erfassen des Stroms durch den Laststrompfad (10);
- einen Controller (8), der dazu eingerichtet ist
- in Abhängigkeit von einer Betriebsart der elektrischen Last (16) eine einzelne Funktion oder eine Kombination von zwei oder mehr Funktionen von mindestens zwei vorgegebenen Funktionen (A, B, C) auszuführen, die eine Stromstärke und/oder einen zeitlichen Stromverlauf des Stroms durch den Laststrompfad (10) mit definierten Schwellwerten vergleichen, und
- in Abhängigkeit eines oder mehrerer Ergebnisse der ausgeführten ein oder mehr Funktionen (A, B, C) die Steuerschaltung (6) mithilfe eines Schaltsignals (50) so anzusteuern, dass ein Ausschalten der Halbleiterschalters (5) erfolgt.

## Beschreibung

Die vorliegende Erfindung betrifft ein Schaltgerät zum Schutz einer elektrischen Last vor Überstrom sowie ein Verfahren.

Der Begriff "Überstrom" beschreibt einen Zustand in einem Stromkreis, bei dem in einem Leiter des Stromkreises der normale Laststrom überschritten wird. Überstrom kann eine Überlast oder einen Kurzschluss als Ursache haben, siehe z.B. DIN VDE 0100-430:2010-10. Ein Überlaststrom, der nur wenig oberhalb des maximalen dauernd zulässigen Stroms des Leiters liegt, erwärmt den Leiter erst nach einer längerer Zeit auf eine unzulässig hohe Temperatur. Dagegen kann bei einem Kurzschlussstrom eine unzulässig hohe Temperatur im Leiter schon in Bruchteilen einer elektrischen Halbschwingung (10 ms bei 50 Hz-Wechselstrom) erreicht sein.

In Niederspannungsnetzen werden Leitungsschutzschalter eingesetzt, um Leiter vor Beschädigung durch Erwärmung infolge von Überstrom zu schützen. Zur Auslösung bei Überlast kann ein Bimetall verwendet werden, das sich bei Erwärmung durch den durchfließenden Strom biegt und einen Abschaltmechanismus auslöst (thermische Auslösung). Zur Auslösung bei Kurzschluss kann ein vom Strom durchflossener Elektromagnet verwendet werden, der innerhalb einiger Millisekunden ein Magnetfeld aufbaut, welches einen Abschaltmechanismus auslöst (elektromagnetische Auslösung).

Aufgrund der extensiven Elektrifizierung und Automatisierung in der Welt und der hohen Risiken für Mensch, Tier und Sachwerte, die von Überstrom ausgehen, besteht ein großer Bedarf nach Verbesserungen im Überstromschutz. Es ist also Aufgabe der vorliegenden Erfindung, den Überstromschutz zu verbessern.

Diese Aufgabe wird erfindungsgemäß durch ein Schaltgerät mit den in Anspruch 1 angegebenen Merkmalen und ein Verfahren mit den in Anspruch 7 angegebenen Merkmalen gelöst.

Das Schaltgerät dient zum Schutz einer elektrischen Last, z. B. eines elektrischen Motors, vor Überstrom. Mit dem Begriff "Schaltgerät" wird, der Abkürzung halber, hier und im Folgenden ein Schalt- und Schutzgerät bezeichnet, welches einem an ein Stromnetz angeschlossenen elektrischen Verbraucher vorgeschaltet ist. Ein solches Schalt- und Schutzgerät umfasst zumindest ein elektrisch schaltbares Schaltelement und trennt in einem Fehlerfall den oder jeden angeschlossenen Verbraucher - oder allgemein einen Lastbereich - von der Speiseseite. Dies ist die Schutzwirkung des Schalt- und Schutzgeräts. Genauso kann mittels des Schalt- und Schutzgeräts auch durch einen auf das Schalt- und Schutzgerät wirkenden Schaltbefehl ein Abschalten des von dem Schalt- und Schutzgerät ausgehenden Lastbereichs und damit das Abschalten des oder jedes an das Schalt- und Schutzgerät angeschlossenen Verbrauchers bewirkt werden. Dies ist die Schaltwirkung des Schalt- und Schutzgeräts.

Das Schaltgerät weist einen Laststromeingang auf, an den eine netzseitige Laststromleitung anschließbar ist, um den Laststromeingang mit einer Stromquelle, z.B. einem Stromnetz, zu verbinden. Das Schaltgerät weist außerdem einen Laststromausgang auf, an den eine Laststromleitung anschließbar ist, um den Laststromausgang mit der elektrischen Last zu verbinden. Das Schaltgerät weist einen Laststrompfad auf, durch den Strom von dem Laststromeingang zu dem Laststromausgang geleitet werden kann.

Das Schaltgerät weist einen Halbleiterschalter auf, der in den Laststrompfad geschaltet ist. Dabei lässt der Halbleiterschalter Strom durch den Laststrompfad zu, wenn der Halbleiterschalter eingeschaltet ist; dagegen sperrt der Halbleiterschalter Strom durch den Laststrompfad, wenn der Halbleiterschalter ausgeschaltet ist. Der Halbleiterschalter ist ein elektrisch schaltbares Schaltelement. Beispielweise ist der Halbleiterschalter ein elektrisch schaltbarer Leistungshalbleiterschalter. Der Halbleiterschalter kann auch als eine bidirektional leit- und sperrfähige Zusammenschaltung zweier Leistungshalbleiterschalter ausgebildet sein.

Das Schaltgerät weist eine Steuerschaltung auf, die dazu eingerichtet ist, in Reaktion auf ein empfangenes Schaltsignal den Halbleiterschalter ein- oder auszuschalten. Ein Schaltzustand des Halbleiterschalters ist über einen Steuereingang des Halbleiterschalters, z. B. einen Gate-Eingang, und mittels eines von der Steuerschaltung, die z. B. in Form einer Steuereinheit ausgebildet sein kann, generierbaren und auf den Steuereingang des Halbleiterschalters ausgegebenen Steuersignals beeinflussbar und wird beim Betrieb des Schaltgeräts mittels eines von der Steuerschaltung generierten und auf den Steuereingang ausgegebenen Steuersignals beeinflusst; der Halbleiterschalter wird mittels des Steuersignals in einen geöffneten oder geschlossenen Zustand geschaltet.

Das Schaltgerät weist eine Strommessanordnung zum Erfassen des Stroms durch den Laststrompfad auf. Als Strommessanordnung kann ein Stromwandler Verwendung finden, zum Beispiel ein Hall-Sensor, ein Messshunt, ein Kompensationsstromwandler oder dergleichen.

Das Schaltgerät weist einen Controller auf. Der Controller ist dazu eingerichtet, in Abhängigkeit von einer Betriebsart der elektrischen Last eine einzelne Funktion oder eine Kombination von zwei oder mehr Funktionen von mindestens zwei vorgegebenen Funktionen auszuführen. Die vorgegebenen Funktionen vergleichen eine Stromstärke und/oder einen zeitlichen Stromverlauf des Stroms durch den Laststrompfad mit definierten Schwellwerten und geben das Ergebnis des Vergleichs aus. Der Controller ist außerdem dazu eingerichtet, in Abhängigkeit eines oder mehrerer Ergebnisse der ausgeführten ein oder mehr Funktionen die Steuerschaltung mithilfe eines Schaltsignals so anzusteuern, dass ein Ausschalten der Halbleiterschalters erfolgt.

Die Aufgabe wird erfindungsgemäß außerdem durch ein Verfahren zum Schutz einer elektrischen Last vor Überstrom gelöst. Das Verfahren weist einen Schritt des Erfassens eines Stroms durch einen Laststrompfad eines Schaltgerät auf. Dabei leitet der Laststrompfad den Strom von einem Laststromeingang, an den eine Laststromleitung von einer Stromquelle angeschlossen ist, zu einem Laststromausgang, an den eine Laststromleitung zu der elektrischen Last angeschlossen ist.

Das Verfahren weist einen Schritt des Bereitstellens mindestens zweier vorgegebener Funktionen auf, die eine Stromstärke und/oder einen zeitlichen Stromverlauf des Stroms durch den Laststrompfad mit definierten Schwellwerten vergleichen.

Das Verfahren weist einen Schritt des Ausführens einer einzelnen Funktion oder einer Kombination von zwei oder mehr Funktionen der vorgegebenen Funktionen auf. Dabei erfolgt das Ausführen in Abhängigkeit von einer Betriebsart der elektrischen Last.

Und das Verfahren weist einen Schritt des Ansteuerns der Steuerschaltung mithilfe eines Schaltsignals auf. Dabei erfolgt das Ansteuern in Abhängigkeit eines oder mehrerer Ergebnisse der ausgeführten ein oder mehr Funktionen. Das Ansteuern erfolgt so, dass ein Ausschalten eines Halbleiterschalters erfolgt, der in den Laststrompfad geschaltet ist. Dabei lässt der Halbleiterschalter Strom durch den Laststrompfad, wenn der Halbleiterschalter eingeschaltet ist. Und der Halbleiterschalter sperrt Strom durch den Laststrompfad, wenn der Halbleiterschalter ausgeschaltet ist.

Der Erfindung liegt die Idee zugrunde, dass ein Überstromschutz als eine SW- bzw. FW-Lösung in einem Controller implementiert wird (SW = Software; FW = Firmware). Durch das frei konfigurierbare Ausführen einer einzelnen Funktion oder einer Kombination von zwei oder mehr Funktionen der vorgegebenen Funktionen kann die Auslösung des Halbleiterschalters vielfältig logisch verknüpft oder zeitlich beeinflusst werden. So kann z.B. im Falle eines Kurzschlusses ein unverzögertes, sehr schnelles Abschalten vorgesehen werden. Es ist durch das konfigurierbare Ausführen einer einzelnen Funktion oder einer Kombination von zwei oder mehr Funktionen der vorgegebenen Funktionen auch möglich, EMV-Störungen auszublenden oder Grenzwertauswertungen bewusst etwas zu verzögern. Auf diese Weise kann ein flexibler Überstromschutz gewährleistet werden.

Vorteilhafte Ausgestaltungen und Weiterbildungen der Erfindung sind in den abhängigen Ansprüchen angegeben. Dabei kann das erfindungsgemäße Verfahren auch entsprechend den abhängigen Vorrichtungsansprüchen weitergebildet sein, und umgekehrt.

Gemäß einer bevorzugten Ausgestaltung der Erfindung weist der vorgegebene Satz von mindestens zwei Funktionen eine erste Funktion auf, mit der der zeitliche Stromverlauf im Laststrompfad kontinuierlich erfasst, mit einem ersten Strom-Schwellwert verglichen und das Resultat des Vergleichs als Ergebnis der Funktion ausgegeben wird. Darüber hinaus weist der vorgegebene Satz von mindestens zwei Funktionen eine zweite Funktion auf, mit der der zeitliche Stromverlauf im Laststrompfad zu bestimmten Zeitpunkten erfasst wird, die erfassten Stromwerte mit einem zweiten Strom-Schwellwert verglichen werden und das Resultat des Vergleichs als Ergebnis der Funktion ausgegeben wird. Außerdem weist der vorgegebene Satz von mindestens zwei Funktionen eine dritte Funktion auf, mit der der zeitliche Stromverlauf im Laststrompfad zu bestimmten Zeitpunkten erfasst wird, eine zeitliche Stromänderung der erfassten Stromwerte mit einem Stromänderungs-Schwellwert verglichen wird und das Resultat des Vergleichs als Ergebnis der Funktion ausgegeben wird. Das Intervall zwischen zwei aufeinanderfolgenden Zeitpunkten, zu denen Stromwerte erfasst werden, kann 1 bis 2 µs betragen; es kann aber auch erheblich länger sein, z.B. 100 µm. Ein Vorteil dieser Ausgestaltung ist, dass, abhängig vom Betrieb des elektrischen Verbrauchers, unterschiedliche Überstrom-Erkennungsalgorithmen aktiviert werden können: somit können ein Kurzschluss und eine Überlast erkannt und voneinander unterschieden werden. Ein weiterer Vorteil dieser Ausgestaltung ist, dass sie bei einem Fehler eine Diagnose erlaubt.

Gemäß einer bevorzugten Ausgestaltung der Erfindung weist das Schaltgerät einen Befehlssignaleingang auf, von dem der Controller einen Schaltbefehl zum Schalten des Halbleiterschalters empfangen kann. Dadurch kann mittels des Schalt- und Schutzgeräts auch durch einen auf das Schalt- und Schutzgerät wirkenden Schaltbefehl ein betriebsmäßiges Abschalten des an das Schalt- und Schutzgerät angeschlossenen Verbrauchers bewirkt werden. Ein Vorteil dieser Ausgestaltung ist, dass auf diese Weise das Schalt- und Schutzgerät als ein Schaltgerät funktioniert, wie ein Relais oder ein Schütz zum betriebsmäßigen An- oder Ausschalten eines elektrischen Verbrauchers.

Gemäß einer bevorzugten Ausgestaltung der Erfindung weist das Schaltgerät einen Analog-Komparator auf, mit dem die erste Funktion einen aktuellen Stromwert des Stromverlaufs im Laststrompfad mit dem ersten Strom-Schwellwert vergleichen kann. Der Analog-Komparator kann als eine Einheit des Controllers ausgebildet sein. Ein Vorteil dieser Ausgestaltung ist, dass eine kontinuierliche Stromüberwachung erfolgen kann.

Gemäß einer bevorzugten Ausgestaltung der Erfindung weist das Schaltgerät einen Digital-Komparator auf, mit dem die zweite Funktion die erfassten Stromwerte mit dem zweiten Strom-Schwellwert und/oder die dritte Funktion die zeitliche Änderung der erfassten Stromwerte mit dem Stromänderungs-Schwellwert vergleichen kann. Der Digital-Komparator kann als eine Einheit des Controllers ausgebildet sein. Ein Vorteil dieser Ausgestaltung ist, dass eine sehr flexible Stromüberwachung erfolgen kann.

Gemäß einer bevorzugten Ausgestaltung der Erfindung weist das Schaltgerät einen Datenspeicher auf, in dem Algorithmen der Funktionen hinterlegt werden können, die definieren, unter welchen Umständen der Controller ein Schaltsignal an die Steuerschaltung ausgibt. Ein Vorteil dieser Ausgestaltung ist, dass eine sehr flexible Stromüberwachung erfolgen kann.

Gemäß einer bevorzugten Ausgestaltung der Erfindung weist das Verfahren ein Bereitstellen folgender drei Funktionen auf: eine erste Funktion, mit der ein zeitlicher Stromverlauf im Laststrompfad kontinuierlich erfasst, mit einem ersten Strom-Schwellwert verglichen und das Resultat des Vergleichs als Ergebnis der Funktion ausgegeben wird; eine zweite Funktion, mit der ein zeitlicher Stromverlauf im Laststrompfad zu bestimmten Zeitpunkten erfasst wird, die erfassten Stromwerte mit einem zweiten Strom-Schwellwert verglichen werden und das Resultat des Vergleichs als Ergebnis der Funktion ausgegeben wird; eine dritte Funktion, mit der ein zeitlicher Stromverlauf im Laststrompfad zu bestimmten Zeitpunkten erfasst wird, eine zeitliche Stromänderung der erfassten Stromwerte mit einem Stromänderungs-Schwellwert verglichen wird und das Resultat des Vergleichs als Ergebnis der Funktion ausgegeben wird. Ein Vorteil dieser Ausgestaltung ist, dass eine sehr flexible Stromüberwachung erfolgen kann.

Gemäß einer bevorzugten Ausgestaltung der Erfindung wird in dem Verfahren ein Schaltsignal zum Ausschalten des Halbleiterschalters an die Steuerschaltung gesendet, falls als Ergebnis der ersten Funktion vorliegt, dass der Strom im Laststrompfad den ersten Strom-Schwellwert überschreitet, oder falls als Ergebnis der zweiten Funktion vorliegt, dass mindestens einer der erfassten Stromwerte des zeitlichen Stromverlaufs im Laststrompfad den zweiten Strom-Schwellwert überschreitet, oder falls als Ergebnis der dritten Funktion vorliegt, dass die zeitliche Stromänderung der erfassten Stromwerte den Stromänderungs-Schwellwert überschreitet. Ein Vorteil dieser Ausgestaltung ist, dass auf einen Überstrom sehr flexibel reagiert werden kann.

Gemäß einer bevorzugten Ausgestaltung der Erfindung ist die elektrische Last ein Elektromotor und im Verfahren wird während eines Hochlaufs des Elektromotors die erste Funktion aktiviert und im Nennbetrieb des Elektromotors die Kombination der ersten und zweiten Funktion oder die Kombination der ersten, zweiten und dritten Funktion aktiviert. Ein Vorteil dieser Ausgestaltung ist, dass die Überwachung des Elektromotors auf einen Überstrom sehr flexibel ist.

Im Folgenden wird die Erfindung anhand mehrerer Ausführungsbeispiele unter Zuhilfenahme der beiliegenden Zeichnung erläutert. Es zeigt jeweils schematisch und nicht maßstabsgetreu
- Fig. 1: ein Schutzgerät;
- Fig. 2: ein Ablaufdiagramm einer ersten Funktion;
- Fig. 3: ein Ablaufdiagramm einer zweiten Funktion;
- Fig. 4: ein Ablaufdiagramm einer dritten Funktion;
- Fig. 5: einen Stromverlauf eines Motorhochlaufs und eines Kurzschlusses;
- Fig. 6: einen Stromverlauf einer Überlast;
- Fig. 7: einen Stromverlauf eines Kurzschlusses;
- Fig. 8: einen Stromverlauf einer Überlast;
- Fig. 9: einen dem Ablaufdiagramm von Fig. 2 entsprechenden Aufbau des Schaltgeräts 1;
- Fig. 10: einen dem Ablaufdiagramm von Fig. 3 entsprechenden Aufbau des Schaltgeräts 1; und
- Fig. 11: einen dem Ablaufdiagramm von Fig. 4 entsprechenden Aufbau des Schaltgeräts 1.

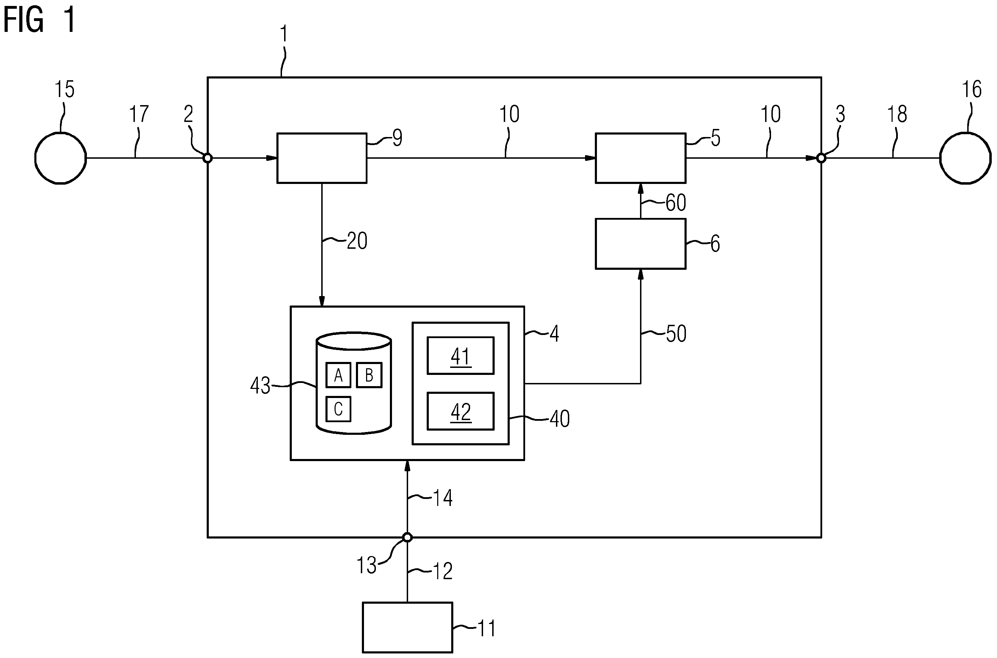

Fig. 1 zeigt ein Schalt- und Schutzgerät 1, der Einfachheit halber als Schutzgerät bezeichnet, zum Schutz einer elektrischen Last 16, z.B. eines Elektromotors, vor einem Überstrom. Das Schaltgerät 1 weist einen Laststromeingang 2 auf, an den eine Laststromleitung 17 von einer Stromquelle 15, z.B. einem Stromnetz, angeschlossen ist. Das Schaltgerät 1 weist einen Laststromausgang 3 auf, an den eine Laststromleitung 18 zu der elektrischen Last 16 angeschlossen ist. Das Schaltgerät 1 weist einen Laststrompfad 10 auf, durch den Strom von dem Laststromeingang 2 zu dem Laststromausgang 3 geleitet werden kann.

Das Schaltgerät 1 weist einen Halbleiterschalter 5 auf, der in den Laststrompfad 10 geschaltet ist. Der Halbleiterschalter 5 lässt Strom durch den Laststrompfad 10 fließen, wenn der Halbleiterschalter 5 eingeschaltet ist. Der Halbleiterschalter 5 sperrt Strom durch den Laststrompfad 10, wenn der Halbleiterschalter 5 ausgeschaltet ist. Das Schaltgerät 1 weist eine Steuerschaltung 6, auch als Treiberschaltung (engl.: Driver Circuit) bezeichnet, auf, die dazu eingerichtet ist, in Reaktion auf ein empfangenes Schaltsignal den Halbleiterschalter 5 ein- oder auszuschalten.

Das Schaltgerät 1 weist eine Strommessanordnung 9 zum Erfassen des Stroms durch den Laststrompfad 10 auf. Als Strommessanordnung kann ein Stromwandler Verwendung finden, zum Beispiel ein Hall-Sensor, ein Messshunt, ein Kompensationsstromwandler oder dergleichen.

Das Schaltgerät 1 weist einen Controller 4 auf. Der Controller 4 ist dazu eingerichtet, in Abhängigkeit von einer Betriebsart der elektrischen Last 16 eine einzelne Funktion oder eine Kombination von zwei oder mehr Funktionen von mindestens zwei vorgegebenen Funktionen A, B, C auszuführen, die eine Stromstärke und/oder einen zeitlichen Stromverlauf des Stroms durch den Laststrompfad 10, die mithilfe der Strommessanordnung 9 erfasst werden, mit definierten Schwellwerten S1, S2, S3 vergleichen.

Der Controller 4 ist dazu eingerichtet, in Abhängigkeit eines oder mehrerer Ergebnisse der ausgeführten ein oder mehr Funktionen A, B, C die Steuerschaltung 6 mithilfe eines Schaltsignals 50 so anzusteuern, dass ein Ausschalten der Halbleiterschalters 5 erfolgt.

Der Controller 4 weist einen Mikroprozessor 40 und einen Datenspeicher 43 auf, in dem die Algorithmen der drei vorgegebenen Funktionen A, B, C in einem Datenformat gespeichert sind. Der Mikroprozessor 40 weist eine Selektionsschaltung 41 und eine Überstromdetektionsschaltung 42 auf.

Das Schaltgerät 1 weist außerdem, einen Befehlssignaleingang 13 auf, über den Befehlsignale 14 von einem externen Befehlssignalgenerator, z.B. einem Smartphone, einem PC, einem Steuergerät oder einem Schaltzentrum, zu dem Controller 4 geleitet werden können. Mit einem solchen, extern erzeugten Befehlsignal 14 kann der Controller 4 getriggert werden, ein Schaltsignal zum Ein- oder Ausschalten des Halbleiterschalters 5 unabhängig von den Messwerten der Strommessanordnung 9 zu erzeugen und an die Steuerschaltung 6 zu senden.

Das Schaltgerät 1 dient zum Ausführen eines Verfahrens zum Schutz der elektrischen Last 16 vor Überstrom. Dazu erfasst die Strommessanordnung 9 einen Strom durch den Laststrompfad 10 des Schaltgeräts 1. In Abhängigkeit von einer Betriebsart der elektrischen Last 16 wird eine einzelne Funktion oder eine Kombination von zwei oder mehr Funktionen der vorgegebenen Funktionen A, B, C ausgeführt. Dabei sind die Funktionen A, B, C eingerichtet, eine Stromstärke und/oder einen zeitlichen Stromverlauf des Stroms durch den Laststrompfad 10 mit definierten Schwellwerten zu vergleichen. In Abhängigkeit eines oder mehrerer Ergebnisse der ausgeführten ein oder mehr Funktionen A, B, C steuert der Controller 4 die Steuerschaltung 6 mithilfe eines Schaltsignals 50 so an, dass ein Ausschalten des Halbleiterschalters 5 erfolgt: a) Falls die Ergebnisse der ausgeführten ein oder mehr Funktionen A, B, C so sind, dass ein Ausschalten des Halbleiterschalters 5 erfolgen soll, so steuert der Controller 4 die Steuerschaltung 6 mithilfe eines Schaltsignals 50 so an, dass die Steuerschaltung 6 ein Steuersignal 60 an den Halbleiterschalters 5 schickt, welches eine Ausschaltung des Halbleiterschalters 5 hervorruft; b) Falls die Ergebnisse der ausgeführten ein oder mehr Funktionen A, B, C ergeben, dass kein Ausschalten des Halbleiterschalters 5 erfolgen soll, so steuert der Controller 4 die Steuerschaltung 6 nicht an, und der Halbleiterschalter 5 bleibt eingeschaltet.

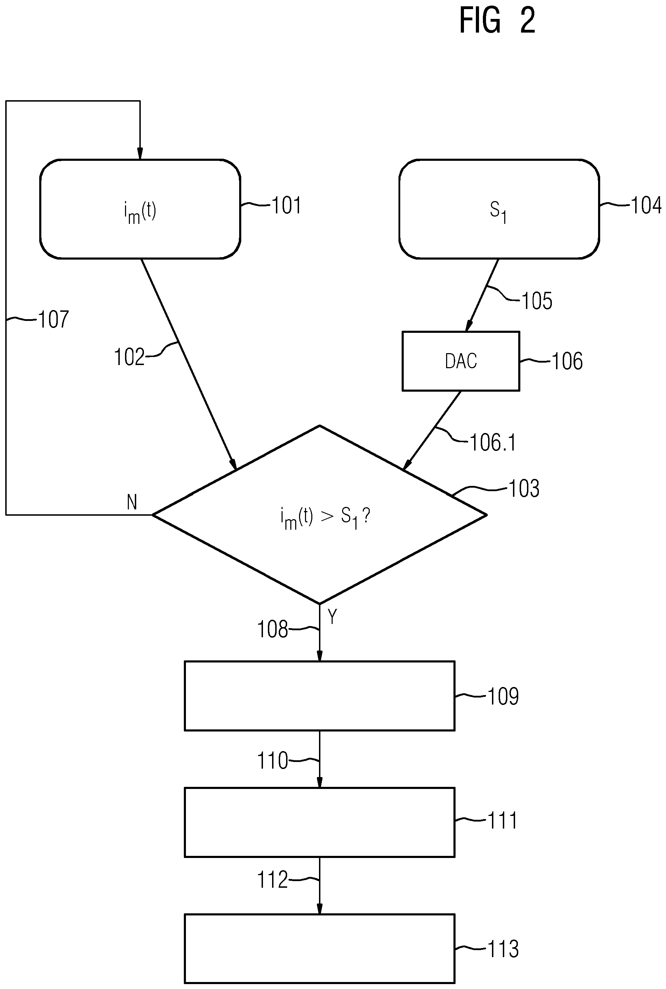

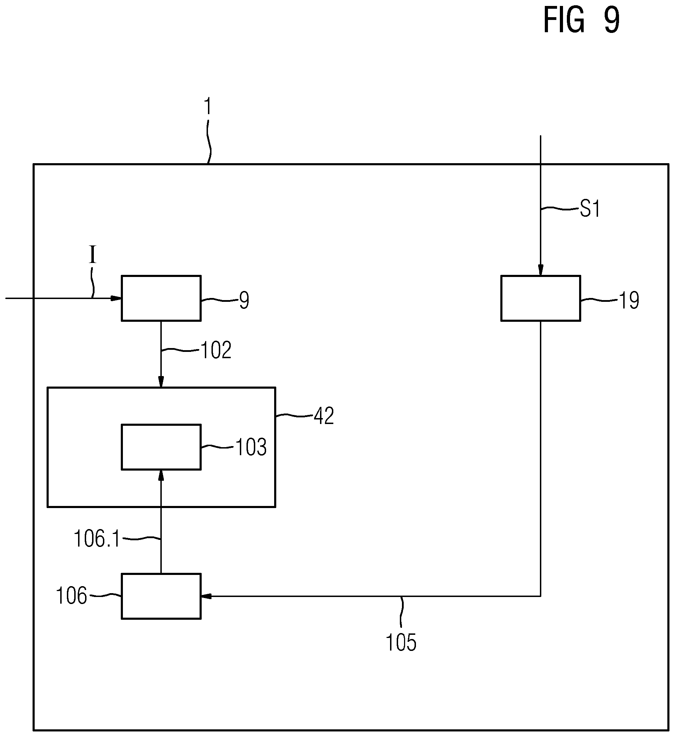

Fig. 2 zeigt ein Ausführungsbeispiel einer ersten Funktion A in Form eines Ablaufdiagramms. Fig. 9 zeigt einen entsprechenden Aufbau des Schaltgeräts 1.

Die erste Funktion A vergleicht den kontinuierlich erfassten Stromverlauf mit einem Strom-Schwellwert in einem Analog-Komparator. Sie bietet den schnellsten Weg zum Abschalten des Halbleiterschalters, erlaubt aber keine Unterscheidung zwischen Kurzschluss und Überlast.

Dabei erfasst 101 die Strommessanordnung 9 den Stromverlauf I im Laststrompfad 10 kontinuierlich. Die erfassten Werte werden als Analogwerte 102 zu einem Analog-Komparator 103 geleitet. Der Analog-Komparator 103 ist Teil einer Überstromdetektionsschaltung 42 des Controllers 4. Ein erster Schwellwert S1 wird über ein Interface 19 des Schaltgeräts 1 in das Schaltgerät 1 eingegeben 104, als Digitalwert 105 zu einem DAC 106 geleitet und von dort als ein Analogwert 106.1 zu dem Analog-Komparator 103 geleitet. Im Analog-Komparator 103 erfolgt ein Vergleich des Stromverlaufs I mit dem ersten Schwellwert S1. Falls der Stromverlauf I den ersten Schwellwert S1 nicht übersteigt ("N") 107, wird die Strommessung 101 fortgesetzt. Falls der Stromverlauf I den ersten Schwellwert S1 übersteigt ("Y") 108, erzeugt 109 die Überstromdetektionsschaltung 42 des Controllers 4 ein Schaltsignal 50, das an die Steuerschaltung 6 übertragen wird 110. Ausgelöst durch das empfangene Schaltsignal 50 erzeugt 111 die Steuerschaltung 6 ein Steuersignal 60, das an den Halbleiterschalter 5 übertragen wird 112 und dort zu einem Ausschalten des Halbleiterschalters 5 führt.

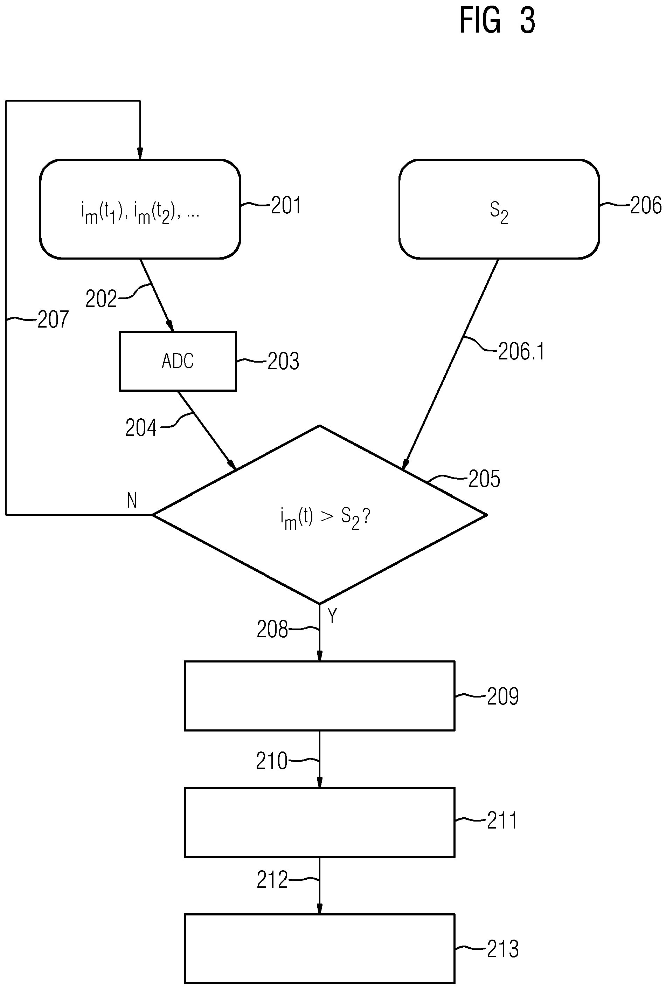

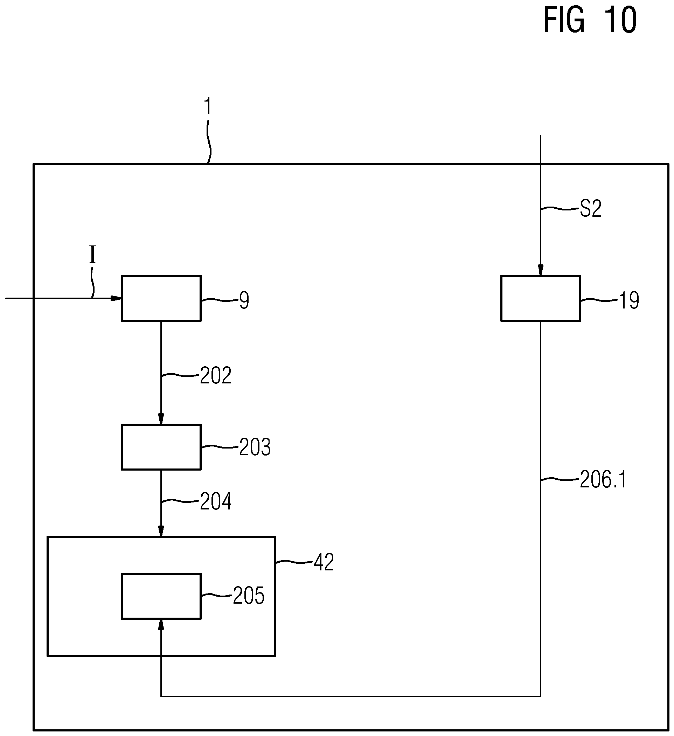

Fig. 3 zeigt ein Ausführungsbeispiel einer zweiten Funktion B in Form eines Ablaufdiagramms. Fig. 10 zeigt einen entsprechenden Aufbau des Schaltgeräts 1.

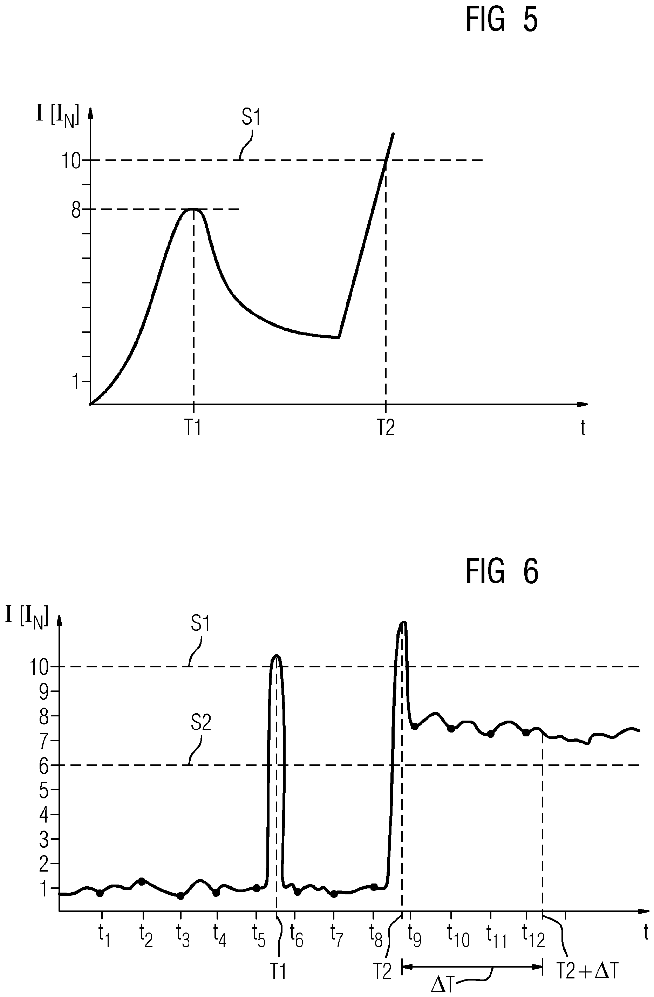

Die zweite Funktion B vergleicht die Werte des diskontinuierlich abgetasteten Stromverlaufs mit einem Strom-Schwellwert in einem Digital-Komparator. Sie bietet einen langsameren Weg als Funktion A zum Abschalten des Halbleiterschalters. Sie erlaubt eine Unterscheidung zwischen Kurzschluss und Überlast, siehe Fig. 6.

Dabei tastet 201 die Strommessanordnung 9 den Stromverlauf I im Laststrompfad 10 diskontinuierlich zu separaten Zeitpunkten ab ("Abtasten"). Die erfassten Stromwerte werden als Analogwerte 202 zu einem ADC 203 geleitet und von dort als Digitalwerte 204 zu einem Digital-Komparator 205 geleitet. Der Digital-Komparator 205 ist Teil einer Überstromdetektionsschaltung 42 des Controllers 4. Ein zweiter Schwellwert S2 wird über ein Interface 19 des Schaltgeräts 1 in das Schaltgerät 1 eingegeben 206 und als Digitalwert 206.1 zu dem Digital-Komparator 205 geleitet. Im Digital-Komparator 205 erfolgt ein Vergleich der erfassten Stromwerte I1(t1), I2(t2), I3(t3), ... mit dem zweiten Schwellwert S2. Falls die erfassten Stromwerte I1(t1), I2(t2), I3(t3), ... den zweiten Schwellwert S2 nicht übersteigen ("N") 207, wird das Abtasten 201 des Stroms fortgesetzt. Falls die erfassten Stromwerte I1(t1), I2(t2), I3(t3), ... den zweiten Schwellwert übersteigen ("Y") 208, erzeugt 209 die Überstromdetektionsschaltung 42 des Controllers 4 ein Schaltsignal 50, das an die Steuerschaltung 6 übertragen wird 210. Ausgelöst durch das empfangene Schaltsignal 50 erzeugt 211 die Steuerschaltung 6 ein Steuersignal 60, das an den Halbleiterschalter 5 übertragen wird 212 und dort zu einem Ausschalten des Halbleiterschalters 5 führt.

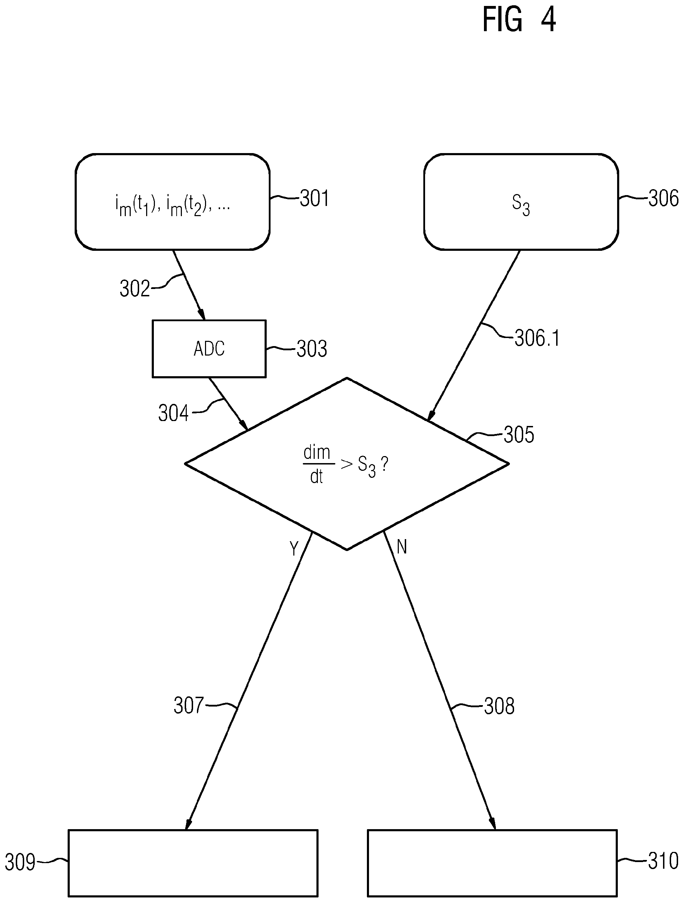

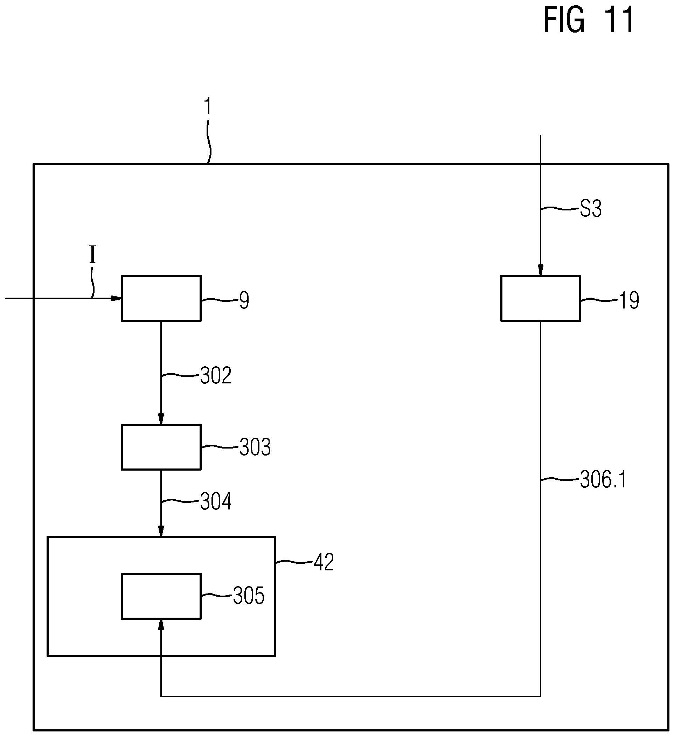

Fig. 4 zeigt ein Ausführungsbeispiel einer dritten Funktion C in Form eines Ablaufdiagramms. Fig. 11 zeigt einen entsprechenden Aufbau des Schaltgeräts 1.

Die dritte Funktion C vergleicht eine zeitliche Änderung des diskontinuierlich abgetasteten Stromverlaufs mit einem Strom-Schwellwert in einem Digital-Komparator. Sie bietet einen langsameren Weg als Funktion A zum Abschalten des Halbleiterschalters, erlaubt aber eine Unterscheidung zwischen Kurzschluss und Überlast.

Dabei tastet 301 die Strommessanordnung 9 den Stromverlauf I im Laststrompfad 10 diskontinuierlich zu separaten Zeitpunkten ab ("Abtasten"). Die erfassten Stromwerte werden als Analogwerte 302 zu einem ADC 303 geleitet und von dort als Digitalwerte 304 zu einem Digital-Komparator 305 geleitet. Der Digital-Komparator 305 ist Teil einer Überstromdetektionsschaltung 42 des Controllers 4. Ein dritter Schwellwert S3 wird über ein Interface 19 des Schaltgeräts 1 in das Schaltgerät 1 eingegeben 306 und als Digitalwert 306.1 zu dem Digital-Komparator 305 geleitet. Im Digital-Komparator 305 erfolgt ein Vergleich einer zeitlichen Änderung dI/dt der erfassten Stromwerte I1(t1), I2(t2), I3(t3), ... mit dem dritten Schwellwert S3. Falls die zeitliche Änderung dI/dt der erfassten Stromwerte I1(t1), I2(t2), I3(t3), ... den dritten Schwellwert S2 nicht übersteigt ("N") 308, gibt die Funktion C als Ergebnis das Vorliegen einer Überlast 310 aus. Falls die zeitliche Änderung dI/dt der erfassten Stromwerte I1(t1), I2(t2), I3(t3), ... den dritten Schwellwert S2 übersteigt ("Y") 307, gibt die Funktion C als Ergebnis das Vorliegen eines Kurzschlusses 309 aus.

Fig. 5 zeigt einen Stromverlauf eines Motorhochlaufs und eines Kurzschlusses. Ein Motor erreiche in seinem Hochlauf zum Zeitpunkt T1 einen maximalen Stromwert von I = 8 x I_Nenn, wobei I_Nenn der Nennwert des Motorstroms im Nennbetrieb sei. Da die Betriebsart des elektrischen Motors ein Hochlauf des Motors ist, aktiviert eine Selektionsschaltung 41 des Controllers 4 die erste Funktion A: man möchte ausschließlich einen "echten" Kurzschluss (I > erster Schwellwert S1) erkennen. Dazu wird im Analog-Komparator ein erster Schwellwert von S1 = 10 x I_Nenn definiert. Der Inrush-Strom von I = 8 x I_Nenn zum Zeitpunkt T1 führt also nicht zum Abschalten des Halbleiterschalters, erst der Kurzschluss zum Zeitpunkt T2, wenn der Strom im Laststrompfad den ersten Schwellwert S1 übersteigt.

Fig. 6 zeigt einen Stromverlauf einer Überlast. Ein Motor befinde sich im Dauerbetrieb. Da die Betriebsart des elektrischen Motors ein Nennbetrieb des Motors ist, aktiviert eine Selektionsschaltung 41 des Controllers 4 die zweite Funktion B: Dadurch ist es möglich, dass ein Abschalten des Helbleiterschalters nicht direkt bei einer Überschreitung eines Schwellwerts erfolgt, sondern erst, wenn ein Schwellwert für eine bestimmte Zeitdauer überschritten wird.

Dazu wird im Digital-Komparator ein zweiter Schwellwert von S2 = 6 x I_Nenn definiert. Der Inrush-Strom von I = 10 x I_Nenn zum Zeitpunkt T1 führt also nicht zum Abschalten des Halbleiterschalters, da er nur über eine relativ kurze Zeitspanne auftritt. Durch das Abtasten des Stromverlaufs zu den fest vorgegebenen Zeitpunkten t1, t2, t3, ... wird der Inrush-Strom zum Zeitpunkt T1 gar nicht erfasst. Erst das Überlastereignis zum Zeitpunkt T2, das über ein Zeitintervall von ΔT andauert, führt also zum Abschalten des Halbleiterschalters.

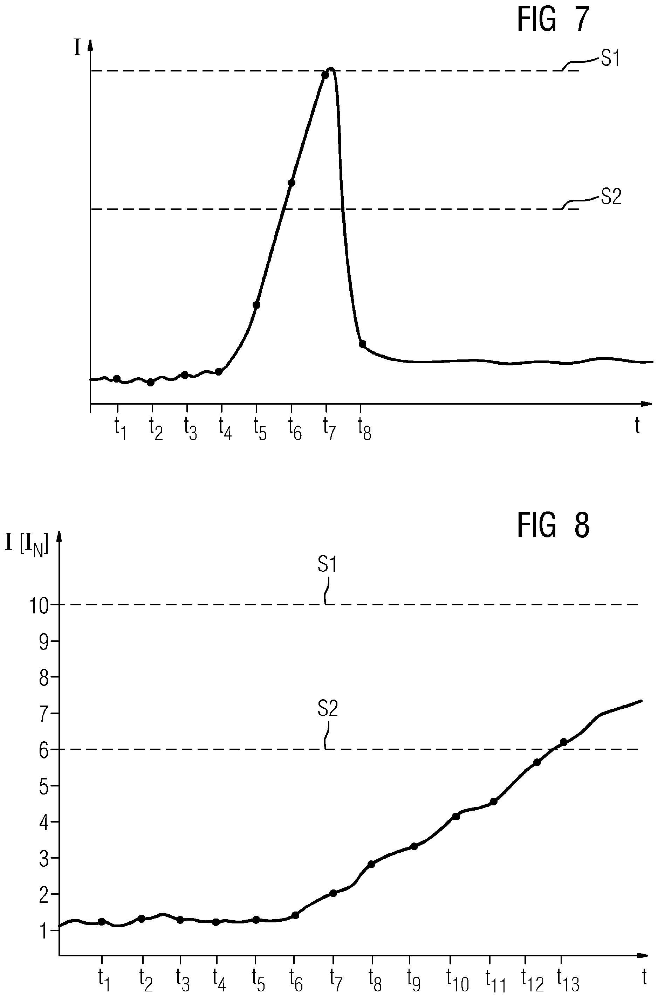

Fig. 7 zeigt einen Stromverlauf eines Kurzschlusses. Da die zu den Zeitpunkten t4, t5, t6 und t7 abgetasteten Stromwerte eine Stromänderung dI/dt ergeben, die über einem dritten Schwellwert S3 = (dI/dt)_limit liegt, gibt die entsprechende Funktion aus, dass ein Kurzschluss vorliegt.

Fig. 8 zeigt einen Stromverlauf einer Überlast. Da die zu den Zeitpunkten t5 bis t13 abgetasteten Stromwerte eine Stromänderung dI/dt ergeben, die unter einem dritten Schwellwert S3 = (dI/dt)_limit liegt, gibt die entsprechende Funktion aus, dass eine Überlast, z.B. eine Motorblockierung, vorliegt.

## Patentansprüche

1. Schaltgerät (1) zum Schutz einer elektrischen Last (16) vor Überstrom, aufweisend:
- einen Laststromeingang (2), an den eine Laststromleitung (17) von einer Stromquelle (15) anschließbar ist, und einen Laststromausgang (3), an den eine Laststromleitung (18) zu der elektrischen Last (16) anschließbar ist;
- einen Laststrompfad (10), durch den Strom von dem Laststromeingang (2) zu dem Laststromausgang (3) geleitet werden kann,
- einen Halbleiterschalter (5), der in den Laststrompfad (10) geschaltet ist, wobei der Halbleiterschalter (5) Strom durch den Laststrompfad (10) zulässt, wenn der Halbleiterschalter (5) eingeschaltet ist, und Strom durch den Laststrompfad (10) sperrt, wenn der Halbleiterschalter (5) ausgeschaltet ist;
- eine Steuerschaltung (6), die dazu eingerichtet ist, in Reaktion auf ein empfangenes Schaltsignal den Halbleiterschalter (5) ein- oder auszuschalten;
- eine Strommessanordnung (9) zum Erfassen des Stroms durch den Laststrompfad (10);
- einen Controller (8), der dazu eingerichtet ist
- in Abhängigkeit von einer Betriebsart der elektrischen Last (16) eine einzelne Funktion oder eine Kombination von zwei oder mehr Funktionen von mindestens zwei vorgegebenen Funktionen (A, B, C) auszuführen, die eine Stromstärke und/oder einen zeitlichen Stromverlauf des Stroms durch den Laststrompfad (10) mit definierten Schwellwerten vergleichen, und
- in Abhängigkeit eines oder mehrerer Ergebnisse der ausgeführten ein oder mehr Funktionen (A, B, C) die Steuerschaltung (6) mithilfe eines Schaltsignals (50) so anzusteuern, dass ein Ausschalten der Halbleiterschalters (5) erfolgt.

2. Schaltgerät nach Anspruch 1,
wobei der vorgegebene Satz von mindestens zwei Funktionen (A, B, C) aufweist:
- eine erste Funktion (A), mit der der Stromverlauf (I(t)) im Laststrompfad (10) kontinuierlich erfasst, mit einem ersten Strom-Schwellwert (S1) verglichen und das Resultat des Vergleichs als Ergebnis der Funktion ausgegeben wird;
- eine zweite Funktion (B), mit der der Stromverlauf (I(t)) im Laststrompfad (10) zu bestimmten Zeitpunkten erfasst wird, die erfassten Stromwerte (I1, I2, 13, ...) mit einem zweiten Strom-Schwellwert (S2) verglichen werden und das Resultat des Vergleichs als Ergebnis der Funktion ausgegeben wird;
- eine dritte Funktion (C), mit der der Stromverlauf (I(t)) im Laststrompfad (10) zu bestimmten Zeitpunkten erfasst wird, eine zeitliche Stromänderung (dI/dt) der erfassten Stromwerte (I1, I2, I3, ...) mit einem Stromänderungs-Schwellwert (S3) verglichen wird und das Resultat des Vergleichs als Ergebnis der Funktion ausgegeben wird.

3. Schaltgerät nach einem der vorhergehenden Ansprüche, aufweisend einen Befehlssignaleingang (13), von dem der Controller (8) einen Schaltbefehl (14) zum Schalten des Halbleiterschalters (5) empfangen kann.

4. Schaltgerät nach einem der vorhergehenden Ansprüche, aufweisend einen Analog-Komparator (AK), mit dem die erste Funktion (A) einen aktuellen Stromwert des Stromverlaufs im Laststrompfad (10) mit dem ersten Strom-Schwellwert (S1) vergleichen kann.

5. Schaltgerät nach einem der vorhergehenden Ansprüche, aufweisend einen Digital-Komparator (DK), mit dem die zweite Funktion (B) die erfassten Stromwerte (I1, I2, I3, ...) mit dem zweiten Strom-Schwellwert (S2) und/oder die dritte Funktion (C) die zeitliche Änderung der erfassten Stromwerte (I1, I2, I3, ...) mit dem Stromänderungs-Schwellwert (S3) vergleichen kann.

6. Schaltgerät nach einem der vorhergehenden Ansprüche, aufweisend einen Datenspeicher (43), in dem Algorithmen der Funktionen (A, B, C) hinterlegt werden können, die definieren, unter welchen Umständen der Controller (8) ein Schaltsignal an die Steuerschaltung (6) ausgibt.

7. Verfahren zum Schutz einer elektrischen Last (16) vor Überstrom, aufweisend folgende Schritte:
Erfassen eines Stroms durch einen Laststrompfad (10) eines Schaltgerät, wobei der Laststrompfad (10) den Strom von einem Laststromeingang (2), an den eine Laststromleitung (17) von einer Stromquelle (15) angeschlossen ist, zu einem Laststromausgang (3), an den eine Laststromleitung (18) zu der elektrischen Last (16) angeschlossen ist, leitet;
- Bereitstellen mindestens zweier vorgegebener Funktionen (A, B, C), die eine Stromstärke und/oder einen zeitlichen Stromverlauf des Stroms durch den Laststrompfad (10) mit definierten Schwellwerten vergleichen;
- Ausführen, in Abhängigkeit von einer Betriebsart der elektrischen Last (16), eine einzelne Funktion oder eine Kombination von zwei oder mehr Funktionen der vorgegebenen Funktionen (A, B, C); und
- Ansteuern, in Abhängigkeit eines oder mehrerer Ergebnisse der ausgeführten ein oder mehr Funktionen (A, B, C), der Steuerschaltung (6) mithilfe eines Schaltsignals so, dass ein Ausschalten eines Halbleiterschalters erfolgt, der in den Laststrompfad (10) geschaltet ist, wobei der Halbleiterschalter (5) Strom durch den Laststrompfad (10) zulässt, wenn der Halbleiterschalter (5) eingeschaltet ist, und Strom durch den Laststrompfad (10) sperrt, wenn der Halbleiterschalter (5) ausgeschaltet ist.

8. Verfahren nach Anspruch 7, aufweisend:
- Bereitstellen folgender drei Funktionen (A, B, C):
- eine erste Funktion (A), mit der ein zeitlicher Stromverlauf (I) im Laststrompfad (10) kontinuierlich erfasst, mit einem ersten Strom-Schwellwert (S1) verglichen und das Resultat des Vergleichs als Ergebnis der Funktion ausgegeben wird;
- eine zweite Funktion (B), mit der ein zeitlicher Stromverlauf (I(t)) im Laststrompfad (10) zu bestimmten Zeitpunkten erfasst wird, die erfassten Stromwerte (I1, I2, I3, ...) mit einem zweiten Strom-Schwellwert (S2) verglichen werden und das Resultat des Vergleichs als Ergebnis der Funktion ausgegeben wird;
- eine dritte Funktion (C), mit der ein zeitlicher Stromverlauf (I(t)) im Laststrompfad (10) zu bestimmten Zeitpunkten erfasst wird, eine zeitliche Stromänderung (dI/dt) der erfassten Stromwerte (I1, I2, I3, ...) mit einem Stromänderungs-Schwellwert (S3) verglichen wird und das Resultat des Vergleichs als Ergebnis der Funktion ausgegeben wird.

9. Verfahren nach einem der Ansprüche 7 und 8, wobei ein Schaltsignal zum Ausschalten des Halbleiterschalters an die Steuerschaltung (6) gesendet wird,
- falls als Ergebnis der ersten Funktion (A) vorliegt, dass der Strom (I) im Laststrompfad (10) den ersten Strom-Schwellwert (S1) überschreitet, oder
- falls als Ergebnis der zweiten Funktion (B) vorliegt, dass mindestens einer der erfassten Stromwerte (I1, I2, I3, ...) des zeitlichen Stromverlaufs (I(t)) im Laststrompfad (10) den zweiten Strom-Schwellwert (S2) überschreitet, oder
- falls als Ergebnis der dritten Funktion (C) vorliegt, dass die zeitliche Stromänderung (dI/dt) der erfassten Stromwerte (I1, I2, I3, ...) den Stromänderungs-Schwellwert (S3) überschreitet.

10. Verfahren nach einem der Ansprüche 7 bis 9,
wobei die elektrische Last (16) ein Elektromotor ist und wobei während eines Hochlaufs des Elektromotors die erste Funktion (A) aktiviert wird und im Nennbetrieb des Elektromotors die Kombination der ersten und zweiten Funktion (A, B) oder die Kombination der ersten, zweiten und dritten Funktion (A, B, C) aktiviert wird.
